# FASCICULE DE BREVET EUROPEEN

(11) **EP 2 228 255 B1**
(45) Date de publication et mention de la délivrance du brevet: **19.09.2012**
(21) Numéro de dépôt: 10155550.6
(22) Date de dépôt: 04.03.2010
(51) Int. Cl.: B60N 3/00

(54) **Dispositif de support rétractable à support guidé en rotation et inclinaison contrôlée**
Verstaubare Haltevorrichtung mit drehgeführter Halterung und kontrollierter Neigung
Retractable support device with rotatably guided support and controlled inclination

(30) Priorité: 10.03.2009 FR 0951497
(43) Date de publication de la demande: 15.09.2010
(73) Titulaire: Peugeot Citroën Automobiles SA, 78140 Vélizy-Villacoublay (FR)
(72) Inventeur: Kervarec, Florian, 91310, LONGPONT SUR ORGE (FR); Barré, Philippe, 94340, JOINVILLE LE PONT (FR)
(74) Mandataire: Vigand, Régis Louis Michel

(56) Documents cités:
- GB-A- 2 436 545
- JP-A- 11 268 588
- US-B1- 6 220 660

## Description

L'invention concerne les équipements (ou accessoires) optionnels qui équipent certains éléments, éventuellement de véhicule (éventuellement de type automobile), et plus précisément les dispositifs de support qui, une fois solidarisés à un élément, peuvent être déployés afin de supporter un ou plusieurs objets.

Comme le sait l'homme de l'art, de nombreux dispositifs de support d'objet(s), pouvant être solidarisés à un élément, ont déjà été proposés. Ces dispositifs peuvent être classés dans deux groupes. Un premier groupe comprend les dispositifs de support qui sont montés sur une face latérale d'un élément, comme par exemple un dossier d'un siège de véhicule. Un second groupe comprend les dispositifs de support qui sont logés à l'intérieur d'un logement, éventuellement dédié, par exemple défini dans un tableau (ou planche) de bord de véhicule. L'invention concerne plus précisément les dispositifs de support du second groupe, dont un exemple de réalisation est décrit dans le document brevet US 6,220,660, B1.

On connaît également du document JP11268588. A un dispositif conforme au préambule de la revendication 1.

Les dispositifs de support connus de ce second groupe présentent un ou plusieurs inconvénients, comme par exemple un encombrement relativement important et/ou un nombre important de pièces nécessaires au déploiement qui en augmente le coût et la fragilité et/ou une position déployée mal adaptée à de nombreux usagers et/ou à l'utilisation optimale de certains équipements électroniques ( ergonomie de la plaque de support).

L'invention a pour but de proposer un dispositif de support rétractable alternatif pouvant être solidarisé à un élément, éventuellement de véhicule (éventuellement de type automobile), et ne présentant pas tout ou partie des inconvénients précités.

Elle propose plus précisément un dispositif de support rétractable, conforme à l'objet de la revendication 1.

Le dispositif selon l'invention peut comporter d'autres caractéristiques qui peuvent être prises séparément ou en combinaison, et notamment :
- il peut comprendre un flasque supérieur placé au moins en partie au-dessus de la plaque de support, solidarisé au flasque inférieur, et comprenant une partie inclinée vers le bas d'un angle choisi, destinée à empêcher un basculement de la plaque de support lorsqu'elle est dans sa position déployée, et comportant un orifice situé dans une zone latérale et logeant une partie d'extrémité supérieure de l'axe ;
   ➢ le flasque supérieur peut comprendre une partie principale prolongée vers l'avant par sa partie inclinée ;
   ➢ le flasque supérieur peut présenter des dimensions générales sensiblement similaires à celles du flasque inférieur.

L'invention propose également un élément, éventuellement de véhicule (éventuellement de type automobile), équipé d'un dispositif de support rétractable du type de celui présenté ci-avant. Un tel élément peut par exemple constituer une partie au moins d'un tableau de bord de véhicule.

D'autres caractéristiques et avantages de l'invention apparaîtront à l'examen de la description détaillée ci-après, et des dessins annexés, sur lesquels :
- la figure 1 illustre schématiquement, dans une vue en perspective, les principaux constituants d'un exemple de réalisation de dispositif de support rétractable selon l'invention, avant assemblage,
- la figure 2 illustre schématiquement, dans une vue en perspective, la face inférieure d'un flasque inférieur du dispositif de support rétractable illustré sur la figure 1,
- la figure 3 illustre schématiquement, dans une vue de face, un exemple de réalisation d'axe de rotation du dispositif de support rétractable illustré sur la figure 1,
- la figure 4 illustre schématiquement, dans une vue en perspective du dessus, la plaque de support assemblée au flasque inférieur du dispositif de support rétractable illustré sur la figure 1, avec sa plaque de support dans une position de rangement (ou rétractée),
- la figure 5 illustre schématiquement, dans une vue en perspective du dessus, le dispositif de support rétractable illustré sur la figure 1, une fois assemblé et dans une position de rangement (ou rétractée),
- la figure 6 illustre schématiquement, dans une vue en coupe selon l'axe Vl-VI de la figure 5, le dispositif de support rétractable de la figure 5,
- la figure 7 illustre schématiquement, dans une vue en perspective du dessus, le dispositif de support rétractable de la figure 1, une fois assemblé et avec sa plaque de support dans une première position intermédiaire (ou partiellement déployée),
- la figure 8 illustre schématiquement, dans une vue en perspective du dessus, le dispositif de support rétractable de la figure 1, une fois assemblé et avec sa plaque de support dans une seconde position intermédiaire (ou partiellement déployée),
- la figure 9 illustre schématiquement, dans une vue en coupe selon l'axe IX-IX de la figure 8, le dispositif de support rétractable de la figure 8,
- la figure 10 illustre schématiquement, dans une vue en perspective de côté, le dispositif de support rétractable de la figure 1, une fois assemblé et avec sa plaque de support dans une position totalement déployée, et
- la figure 11 illustre schématiquement, dans une vue en coupe selon l'axe XI-XI de la figure 10, le dispositif de support rétractable de la figure 10.

Les dessins annexés pourront non seulement servir à compléter l'invention, mais aussi contribuer à sa définition, le cas échéant.

L'invention a pour but d'offrir un dispositif de support rétractable (D) destiné à être solidarisé à un élément.

Dans ce qui suit, on considère, à titre d'exemple non limitatif, que l'élément est un tableau (ou planche) de bord d'un véhicule automobile, comme par exemple une voiture. Mais, l'invention n'est pas limitée à ce type d'élément. Elle concerne en effet tout type d'élément capable de supporter ou de loger un dispositif de support rétractable (D) ainsi qu'au moins un objet (éventuellement de type ordinateur portable ou console de jeux, ou de type écran, tactile ou non avec ou sans clavier, ou encore de type clavier avec ou sans écran) supporté par ledit dispositif (D). Par conséquent, l'élément pourra être également une partie de la structure d'un véhicule ou d'un garnissage de véhicule, éventuellement automobile, un mur d'enceinte ou un plateau de table, par exemple.

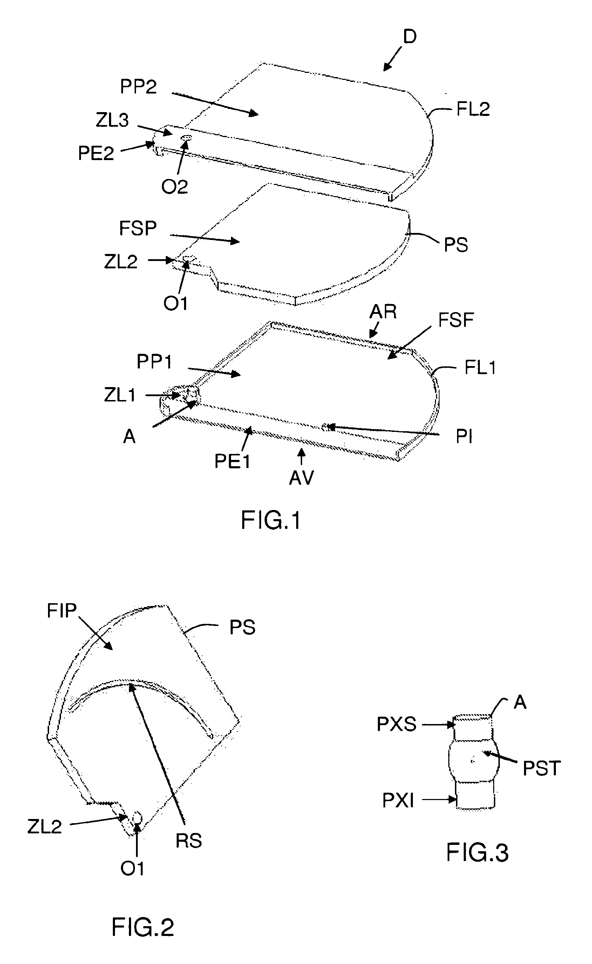

On a schématiquement représenté sur la figure 1 les principaux constituants d'un exemple de réalisation de dispositif de support rétractable D selon l'invention.

Comme illustré, un dispositif (de support rétractable) D, selon l'invention, comprend au moins un flasque inférieur FL1 et une plaque de support (ou tablette) PS.

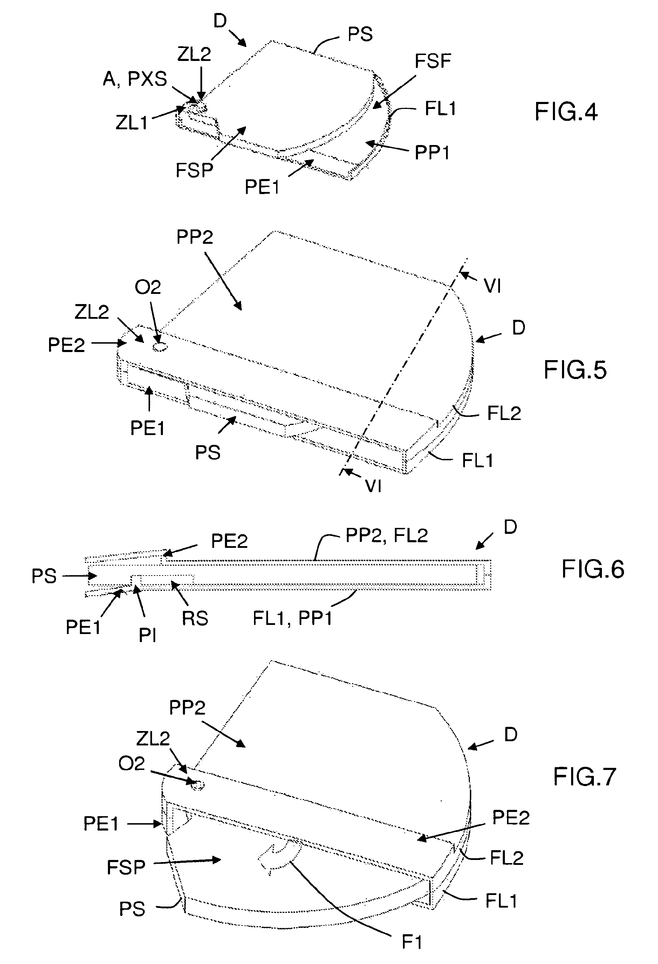

Le flasque inférieur FL1 comprend une partie principale PP1, de préférence sensiblement plane, prolongée vers l'avant AV par une partie d'extrémité PE1 qui est inclinée vers le bas d'un angle choisi (voir figure 6). Ce flasque inférieur FL1 comporte juste avant la partie d'extrémité PE1 un axe (de rotation) A et un pion PI.

Sur la figure 1 la référence AR désigne l'arrière du flasque inférieur FL1 et plus généralement du dispositif D.

L'axe A est situé dans une zone latérale ZL1 (c'est-à-dire sur un côté) du flasque inférieur FL1. Comme illustré sur la figure 3, cet axe A comprend une portion semi torique PST dont on comprendra l'utilité plus loin. II est important de noter que cet axe A peut être soit une pièce rapportée dont une partie d'extrémité inférieure PXI (située en dessous de sa portion semi torique PST) est solidarisée à une face dite supérieure FSF du flasque inférieur FL1 au niveau d'une ouverture dédiée, soit une partie intégrante du flasque inférieur FL1. De même, la portion semi torique PST peut être soit une pièce rapportée sur l'axe A, soit une partie intégrante de l'axe A.

On entend ici par « face supérieure » une face qui est orientée vers le haut lorsque le dispositif D est installé sur ou dans un élément, et par « face inférieure » une face qui est orientée vers le bas lorsque le dispositif D est installé sur ou dans un élément.

Le pion PI est situé à une distance choisie d de l'axe A. Son utilité apparaîtra plus loin. Il est important de noter que ce pion PI peut être soit une pièce rapportée dont une partie d'extrémité inférieure est solidarisée à la face supérieure FSF du flasque inférieur FL1 au niveau d'une ouverture dédiée, soit une partie intégrante du flasque inférieur FL1.

La plaque de support PS comprenant un orifice 01 qui est situé dans une zone latérale ZL2 (c'est-à-dire sur un côté et plus précisément ici dans un coin). Cet orifice 01 est agencé de manière à loger la portion semi torique PST de l'axe A.

Par ailleurs, la plaque de support PS comprend une face dite supérieure FSP et une face dite inférieure FIP opposées l'une à l'autre. La face supérieure FSP est agencée de manière à supporter au moins un objet. Elle est donc de préférence sensiblement plane. Comme illustré sur la figure 2, la face inférieure FIP est munie d'une rainure semi-circulaire RS qui est centrée sur l'orifice 01 et espacée de ce dernier (O1) d'une distance constante égale à la distance choisie d. Cette rainure RS est adaptée au coulissement du pion PI.

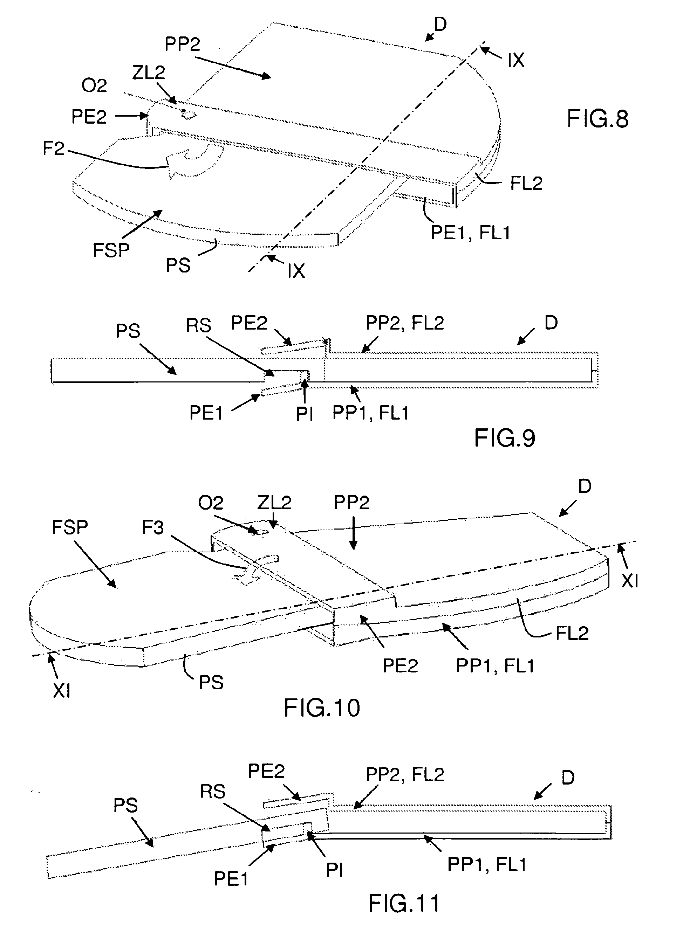

Comme illustré sur la figure 4, une fois que la plaque de support PS a été solidarisée au flasque inférieur FL1 via l'axe A, elle (PS) est placée juste au-dessus de la face supérieure FSP du flasque inférieur FL1. En effet, sa face inférieure ne repose pas (du moins entièrement) sur la face supérieure FSP du flasque inférieur FL1 du fait qu'elle est écartée de cette face supérieure FSP par une partie de l'axe A et par une partie du pion PI. La plaque de support PS peut donc être entraînée en rotation autour de l'axe A (et plus précisément de sa portion semi torique PST) entre une position rétractée (illustrée sur les figures 4 à 6), dans laquelle elle est placée au dessus de la partie principale PP1 du flasque inférieur FL1, et une position (totalement) déployée (illustrée sur les figures 10 et 11), dans laquelle elle repose en partie sur la partie d'extrémité PE1 du flasque inférieur FL1.

La rotation de la plaque de support PS par rapport à l'axe A, et donc par rapport au flasque inférieur FL1, est guidée par le coulissement du pion PI dans la rainure RS. Cette dernière (RS) s'étend sur un secteur angulaire qui est choisi de manière à permettre (ici) une rotation d'environ 90 ° de la plaque de support PS pour passer de sa position rétractée à sa position déployée et inversement. Ces deux dernières positions sont définies par les positions relatives du pion PI par rapport à la rainure RS. Plus précisément, lorsque la plaque de support PS est dans sa position rétractée, le pion PI bute contre l'une des deux extrémités opposées de la rainure RS, par exemple celle qui est la plus à droite, et lorsque la plaque de support PS est dans sa position déployée, le pion PI bute contre l'autre extrémité de la rainure RS, par exemple celle qui est la plus à gauche.

Il est important de noter, comme illustré sur la figure 11, que lorsque la plaque de support PS est placée dans sa position déployée, elle est bloquée en rotation au moins par le pion PI qui bute contre l'une des deux extrémités opposées de la rainure RS (ici celle qui est la plus à gauche).

On comprendra que l'angle d'inclinaison vers le bas de la partie d'extrémité PE1 du flasque inférieur FL1 est choisi de manière à définir sensiblement l'angle d'inclinaison que doit faire la plaque de support PS par rapport au plan horizontal local lorsqu'elle est placée dans sa position déployée. Cet angle d'inclinaison est supérieur ou égal à 1°. Par exemple (et non limitativement) il peut être compris entre environ 1 °et environ 15°. >.

On comprendra également que c'est la portion semi torique PST de l'axe A qui permet d'incliner la plaque de support PS vers le bas (ou éventuellement vers le haut) tout en l'autorisant à tourner.

Afin d'améliorer sensiblement le maintien de la plaque de support PS dans sa position déployée, il est avantageux que le dispositif D comprenne également un flasque supérieur FL2, comme illustré non limitativement sur les figures 1 et 5 à 11.

Ce flasque supérieur FL2 est placé au moins en partie au-dessus de la plaque de support PS et solidarisé au flasque inférieur FL1, et comprend une partie PE2 qui est inclinée vers le bas d'un angle choisi (comme illustré sur les figures 6 et 9 à 11) et qui comporte un orifice 02 qui est situé dans une zone latérale ZL3 (ici dans un coin) et loge la partie d'extrémité supérieure PXS de l'axe A (située au dessus de sa portion semi torique PST).

La solidarisation du flasque supérieur FL2 au flasque inférieur FL1 peut se faire par tout moyen connu de l'homme de l'art, et notamment par vissage, clippage, soudage, collage ou boutrolage.

On notera que l'on peut envisager une variante dans laquelle les flasques supérieur FL2 et inférieur FL1 forment un élément monobloc (par exemple réalisé par moulage) sur lequel est/sont rapportés l'axe A et/ou le pion PI.

La partie inclinée PE2 est, comme illustré sur la figure 11, destinée à empêcher le basculement de la plaque de support PS lorsqu'elle est dans sa position déployée. On comprendra en effet que lorsque la plaque de support PS est dans sa position déployée, sa face inférieure s'appuie sur la face supérieure de la partie d'extrémité PE1 du flasque inférieur FL1 et donc la partie de son bord périphérique qui est momentanément située entre l'axe A et le pion PI n'est retenue que par ces derniers (A et PI). Le pion PI pourrait donc sortir de la rainure RS en l'absence d'une surface de butée supérieure pour la partie précitée du bord périphérique de la plaque de support PS. La partie inclinée PE2 définit cette surface de butée qui va interdire un déplacement vertical vers le haut de la partie précitée du bord périphérique de la plaque de support PS et donc contraindre le pion PI à demeurer logé dans la rainure RS, permettant ainsi de garantir le maintien de la plaque de support PS dans une position déployée stable.

Comme illustré sur les figures 1 et 5 à 11, le flasque supérieur FL2 peut comprendre une partie principale PP2 qui est prolongée vers l'avant par la partie inclinée PE2. Dans ce cas, il est avantageux que le flasque supérieur FL2 présente des dimensions générales sensiblement similaires à celles du flasque inférieur FL1. On notera cependant que la partie inclinée PE2 du flasque supérieur FL2 s'étend de préférence sur une plus grande largeur (c'est-à-dire vers l'arrière AR) que la partie d'extrémité PE1 du flasque inférieur FL1 du fait qu'elle doit comporter l'orifice 02 et servir de face de butée à une partie du bord périphérique de la plaque de support PS.

Le déploiement manuel par un usager de la plaque de support PS (jusqu'alors placée dans sa position rétractée illustrée sur les figures 4 à 6) se fait en deux étapes.

Une première étape consiste à saisir avec une main la partie (éventuellement conformée) de la plaque de support PS qui se trouve placée à l'avant AV du dispositif D, afin de l'entraîner en rotation vers l'avant AV (flèches F1 et F2 des figures 7 et 8) jusqu'à ce que le pion PI se retrouve contre l'une des extrémités de la rainure RS.

Une seconde étape consiste à exercer une pression vers le bas sur la face supérieure FSP de la plaque de support PS, comme cela est matérialisé par la flèche F3 de la figure 10, jusqu'à ce que la face inférieure FIP de la plaque de support PS s'appuie sur la face supérieure de la partie d'extrémité PE1 du flasque inférieur FL1. La plaque de support PS est alors dans sa position totalement déployée et est prête à recevoir un ou plusieurs objets, comme par exemple un ordinateur ou une console de jeux.

Le rangement manuel par un usager de la plaque de support PS (jusqu'alors déployée) dans les flasques inférieur FL1 et supérieur FL2 se fait également en deux étapes.

Une première étape consiste à redresser vers le haut avec une main la plaque de support PS, jusqu'à ce qu'elle se retrouve sensiblement à l'horizontal (c'est-à-dire parallèle à la partie principale PP1 du flasque inférieur FL1).

Une seconde étape consiste à entraîner en rotation vers l'arrière AR la plaque de support PS, jusqu'à ce que le pion PI se retrouve contre l'une des extrémités de la rainure RS. La plaque de support PS est alors logée quasiment intégralement à l'intérieur de l'espace qui est défini entre les flasques inférieur FL1 et supérieur FL2, et donc placée dans sa position rétractée.

On notera que l'on peut envisager d'automatiser au moins partiellement le déploiement et/ou le rangement de la plaque de support PS par exemple au moyen de moteur(s) et/ou de vérin(s) (qui font alors partie du dispositif D).

On notera également que la plaque de support PS peut être dimensionnée de manière à recevoir un objet tel qu'un ordinateur portable ou une console de jeux. Par ailleurs, cette plaque de support PS peut éventuellement comprendre sur une partie au moins de son bord périphérique des moyens saillant sur sa face supérieure FSP afin de définir des butées de retenue pour les objets supportés. D'autre part, la plaque de support PS peut éventuellement comprendre au moins un trou traversant destiné à recevoir la partie inférieure d'un verre ou d'un conteneur de liquide (par exemple une bouteille ou une canette). Enfin, la plaque de support PS peut éventuellement comprendre un connecteur intégré destiné à permettre le raccordement électrique d'un équipement électronique à une source d'énergie électrique distante (par exemple la batterie d'un véhicule automobile). Dans ce cas, le connecteur intégré est relié à la source d'énergie électrique via un câble d'alimentation qui peut être logé à l'intérieur du premier flasque FL1 et/ou du second flasque FL2.

On notera également que les constituants du dispositif D peuvent être par exemple réalisés par moulage dans une matière plastique ou synthétique. Mais, dans une variante tous ou certains au moins des constituants du dispositif D pourraient être également réalisés en métal (par exemple par découpe et emboutissage).

L'invention ne se limite pas aux modes de réalisation de dispositif de support rétractable et d'élément décrits ci-avant, seulement à titre d'exemple, mais elle englobe toutes les variantes que pourra envisager l'homme de l'art dans le cadre des revendications ci-après.

## Revendications

1. Dispositif de support rétractable (D), destiné à être solidarisé à un élément, comprenant :
i) un flasque inférieur (FL1) comprenant une partie principale (PP1), prolongée vers l'avant par une partie d'extrémité, et comportant juste avant ladite partie d'extrémité (PE1) un axe (A), situé dans une zone latérale (ZL1) et comprenant une portion semi torique (PST), et un pion (PI) situé à une distance choisie dudit axe (A), et
ii) une plaque de support (PS), d'une part, comprenant un orifice (O1) situé dans une zone latérale (ZL2) et logeant ladite portion semi torique (PST) de l'axe (A), une face dite supérieure (FSP) propre à supporter au moins un objet et une face dite inférieure (FIP) opposée à ladite face supérieure (FSP) et munie d'une rainure semi-circulaire (RS) centrée sur ledit orifice (O1) à une distance égale à ladite distance choisie, et adaptée au coulissement dudit pion (PI), et d'autre part, pouvant être entraînée en rotation autour dudit axe (A) entre une position rétractée, dans laquelle elle est placée au dessus de ladite partie principale (PP1) dudit flasque inférieur (FL1), et une position déployée, dans laquelle elle est bloquée en rotation par ledit pion (PI) qui bute contre une extrémité de ladite rainure (RS), **caractérisé en ce que** :
ladite partie principale (PP1) dudit flasque inférieur (FL1) est prolongée vers l'avant par une partie d'extrémité (PE1) inclinée vers le bas d'un angle choisi et que, ladite portion semi toxique (PST) dudit axe (A) est logée dans ladite plaque de support (PS), de sorte qu'en position déployée celle-ci (PS) repose en partie sur ladite partie d'extrémité (PE1) du flasque inférieur (FL1)..

2. Dispositif selon la revendication 1, **caractérisé en ce qu'**il comprend un flasque supérieur (FL2) placé au moins en partie au-dessus de ladite plaque de support (PS), solidarisé audit flasque inférieur (FL1), et comprenant une partie (PE2) inclinée vers le bas d'un angle choisi, destinée à empêcher un basculement de ladite plaque de support (PS) lorsqu'elle est dans sa position déployée, et comportant un orifice (02) situé dans une zone latérale (ZL3) et logeant une partie d'extrémité supérieure dudit axe (A).

3. Dispositif selon la revendication 2, **caractérisé en ce que** ledit flasque supérieur (FL2) comprend une partie principale (PP2) prolongée vers l'avant par ladite partie inclinée (PE2).

4. Dispositif selon l'une des revendications 2 et 3, **caractérisé en ce que** ledit flasque supérieur (FL2) présente des dimensions générales sensiblement similaires à celles dudit flasque inférieur (FL1).

5. Elément **caractérisé en ce qu'**il comprend un dispositif de support rétractable (D) selon l'une des revendications 1 à 4.

6. Elément selon la revendication 5, **caractérisé en ce qu'**il constitue une partie au moins d'un tableau de bord de véhicule.

## Claims

1. Retractable support device (D), intended to be connected to an element, comprising:
i) a lower flange (FL1) comprising a main part (PP1) which is extended towards the front by an end part, and including, just before said end part (PE1), a shaft (A), which is located in a lateral region (ZL1) and comprises a semi-toric portion (PST), and a pin (PI) located at a selected distance from said shaft (A), and
ii) a support plate (PS) comprising an opening (O1) which is located in a lateral region (ZL2) and accommodates said semi-toric portion (PST) of the shaft (A), a so-called upper face (FSP) able to support at least one object, and a so-called lower face (FIP) opposite said upper face (FSP) and equipped with a semi-circular groove (RS) which is centred on said opening (O1) at a distance equal to said selected distance and adapted to the sliding of said pin (PI), said support plate being capable of being driven in rotation about said shaft (A) between a retracted position, in which the support plate is positioned above said main part (PP1) of said lower flange (FL1), and a deployed position, in which the support plate is locked in rotation by said pin (PI), which abuts against an end of said groove (RS), **characterised in that**:
said main part (PP1) of said lower flange (FL1) is extended towards the front by an end part (PE1) which is inclined downwards at a selected angle, and **in that** said semi-toric portion (PST) of said shaft (A) is accommodated in said support plate (PS) such that, in a deployed position, said support plate (PS) rests in part on said end part (PE1) of the lower flange (FL1).

2. Device according to claim 1, **characterised in that** it comprises an upper flange (FL2) which is positioned, at least in part, above said support plate (PS), is connected to said lower flange (FL1) and comprises a part (PE2) which is inclined downwards at a selected angle, is intended to prevent tipping of said support plate (PS) when it is in its deployed position, and includes an opening (02) located in a lateral region (ZL3) and accommodating an upper end part of said shaft (A).

3. Device according to claim 2, **characterised in that** said upper flange (FL2) comprises a main part (PP2) which is extended towards the front by said inclined part (PE2).

4. Device according to either claim 2 or claim 3, **characterised in that** said upper flange (FL2) has general dimensions which are substantially similar to those of said lower flange (FL1).

5. Element, **characterised in that** it comprises a retractable support device (D) according to any of claims 1 to 4.

6. Element according to claim 5, **characterised in that** it constitutes at least part of a vehicle instrument panel.

## Patentansprüche

1. Einziehbare Auflagevorrichtung (D), die dazu bestimmt ist, kraftschlüssig mit einem Element verbunden zu werden, umfassend:
i) eine untere Flanschplatte (FL1) umfassend einen Hauptabschnitt (PP1), der durch einen Endstückabschnitt nach vorne verlängert wird, und der unmittelbar vor dem besagten Endstückabschnitt (PE1) eine Achse (A) umfasst, die in einem seitlichen Bereich (ZL1) angeordnet ist, und einen bauchigen Teil (PST) umfasst, sowie einen Stift (PI), der in einem ausgewählten Abstand zur besagten Achse (A) angeordnet ist, und
ii) eine Auflageplatte (PS), die einerseits eine Öffnung (O1) in einem seitlichen Bereich (ZL2) umfasst, die den besagten bauchigen Teil (PST) der Achse (A) aufnimmt, eine als Oberseite bezeichnete Seite (FSP), die zumindest einen Gegenstand tragen kann, und eine als Unterseite bezeichnete Seite (FIP), die der besagten Oberseite (FSP) gegenüber liegt, und mit einer halbkreisförmigen Nut (RS) versehen ist, die mittig auf der besagten Öffnung (O1) im gleichen Abstand zum besagten ausgewählten Abstand angeordnet ist, und durch die der besagte Stift (PI) gleiten kann, und die andererseits in Drehung um die besagte Achse (A) zwischen einer eingeschobenen Stellung verschoben werden kann, in der sie sich unterhalb des besagten Hauptabschnitts (PP1) der besagten unteren Flanschplatte (FL1) befindet, und einer ausgefahrenen Stellung, in der sie vom besagten Stift (PI) blockiert wird, um sich nicht weiter zu drehen, wobei der Stift (PI) dabei an einem Ende der besagten Nut (RS) anschlägt, **dadurch gekennzeichnet, dass**:
der besagte Hauptabschnitt (PP1) der besagten unteren Flanschplatte (FL1) durch einen Endstückabschnitt (PE1) nach vorne verlängert ist, der in einem ausgewählten Winkel nach unten geneigt ist, und dadurch, dass der besagte bauchige Teil (PST) der besagten Achse (A) in der besagten Auflageplatte (PS) angeordnet ist, sodass diese (PS) in der ausgefahrenen Stellung teilweise auf dem besagten Endstückabschnitt (PE1) der unteren Flanschplatte (FL1) aufliegt.

2. Vorrichtung nach Anspruch 1, **dadurch gekennzeichnet, dass** sie eine obere Flanschplatte (FL2) umfasst, die zumindest teilweise oberhalb der besagten Auflageplatte (PS) angeordnet ist, und die kraftschlüssig mit der besagten unteren Flanschplatte (FL1) verbunden ist, und die einen Abschnitt (PE2) umfasst, der in einem ausgewählten Winkel nach unten geneigt ist, und der dazu bestimmt ist, ein Kippen der besagten Auflageplatte (PS) zu verhindern, wenn sich diese in der ausgefahrenen Stellung befindet, und umfassend eine Öffnung (02), die sich in einem seitlichen Bereich (ZL3) befindet, und einen Teil des oberen Endes der besagten Achse (A) aufnimmt.

3. Vorrichtung nach Anspruch 2, **dadurch gekennzeichnet, dass** die besagte obere Flanschplatte (FL2) einen Hauptabschnitt (PP2) umfasst, der durch den besagten Endstückabschnitt (PE2) nach vorne verlängert wird.

4. Vorrichtung nach einem der Ansprüche 2 und 3, **dadurch gekennzeichnet, dass** die besagte obere Flanschplatte (FL2) allgemeine Abmessungen aufweist, die in etwa jenen der besagten unteren Flanschplatte (FL1) ähneln.

5. Element, **dadurch gekennzeichnet, dass** es eine einziehbare Auflagevorrichtung (D) nach einem der Ansprüche 1 bis 4 umfasst.

6. Element nach Anspruch 5, **dadurch gekennzeichnet, dass** es zumindest einen Abschnitt eines Armaturenbretts eines Fahrzeugs bildet.
